# EUROPEAN PATENT APPLICATION

(11) **EP 4 610 043 A1**
(43) Date of publication of application: **03.09.2025**
(21) Application number: 24160548.4
(22) Date of filing: 29.02.2024
(51) Int. Cl.: B32B 5/02, B32B 5/06, B32B 5/08, B32B 5/10, B32B 5/26, B32B 7/027

(54) **HEAT AND FIRE SHIELDING THERMOPLASTIC COMPOSITE**

(71) Applicant: Mitsubishi Chemical Advanced Materials GmbH, 48691 Vreden (DE)
(72) Inventor: CONN, John, 48691 Vreden (DE); LICHTBLAU, Leonard, 48691 Vreden (DE); PAPIEROK, Kevin, 48691 Vreden (DE); JOHÄNNING, Frank, 48691 Vreden (DE); BASER, Burak, 48691 Vreden (DE); VIETZE, Simone, 48691 Vreden (DE); REMP, Marcel, 48691 Vreden (DE)
(74) Representative: V.O.

(57) **Abstract**

Use of a composite as a heat and fire shielding material particularly in batteries, wherein the composite comprises at least one layer of a thermoplastic material, wherein said at least one layer is based on an at least partial consolidation of a mixture of:
a. one or more thermoplastic fibers selected from the group consisting of polyphenylene sulfide (PPS), polyether ether ketone (PEEK), polyether ketone-ketone (PEKK), polyether imide (PEI), polyether sulfone (PES), polysulfone (PSU), polyphenylene sulfone (PPSU), polyimide (PI), polycarbonate (PC), polyamide (PA), polyaryletherketone (PAEK) or any combination thereof; and
b. one or more reinforcement fibers;
wherein at least 90 vol % of the one or more reinforcement fibers have an average length according to a gaussian normal distribution of at least 6 mm, preferably of at least 10 mm, more preferably of at least 20 mm.

## Description

### TECHNICAL FIELD OF THE INVENTION

The present invention relates to a composite, a use of the composite and a method to produce said composite. The composite is particularly applicable for use as a heat and fire shielding material.

### BACKGROUND OF THE INVENTION

Multiple key industries, such as automotive, housing & construction, aerospace, energy, ... concentrate on becoming more environmentally friendly. To help and/or push these industries in this capital intensive transition, several European countries, are forcing legislations to guide the transformation to a greener lifestyle. A key aspect to reach this transition is to transform from a fossil-based economy to a renewable energy based civilization. To succeed, many industries currently using fossil-based fuels are transferring to electrical energy sources such as rechargeable electrical energy storage systems (battery). Batteries may have the advantage to run an equipment on energy that can be provided by renewable energy sources such as solar and/or wind power.

As of today, electrical energy sources such as batteries have already entered multiple industries. A typical example can be found in automotive where a propulsion motor may be replaced with a battery. At present, the disadvantage of battery-based vehicles is the limited driving range. An aspect to increase the driving distance is to reduce the weight of the vehicle by, for example, replacing heavy components such as steel for a battery housing with more lightweight materials. Consequently, introducing composite materials into multiple battery applications.

Rechargeable or reloadable batteries or rechargeable electrical energy storage systems comprising a number of single battery cells, such as for example lithium-ion cells, are known and used in several fields of technique, including e.g. as electric power supply of mobile phones and portable computers or electric cars or vehicles or hybrid cars.

It is also known that particularly rechargeable battery cells, such as lithium-ion cells, sometimes undergo internal overheating caused by events such as short circuits within the cell, improper cell use, manufacturing defects or exposure to extreme external temperature. This internal overheating can lead to a so called "thermal runaway" when the reaction rate within the cell caused by the high temperature increases to a point where more heat is generated within the cell than can be withdrawn and the generated heat leads to a further increase of the reaction rate and in turn of the generated heat. In standard lithium-ion (Li-ion) battery configurations, for example, the heat generated within such defective cells can reach 500 to 1000°C, in localized hot spots even more.

In particular, it is essential in such cases to interrupt or at least reduce a heat transfer from defective cells or cell packs to other parts of the storage system or around the storage system, because the heat generated in a defective battery cell or cell pack can spread out to the neighboring cells, which in turn can cause overheat and then undergo thermal runaway. Also it is important to limit the heat transfer to parts around the storage system, which may get destroyed or harmed when treated with the above-mentioned temperatures, causing electrical shortages which in turn could lead to unwanted effects as further cells getting into a thermal runaway.

It is accordingly usual to provide safety precautions for protecting the environment of overheated battery cells or packs of battery cells against the generated heat, including, in particular, not yet affected battery cells or packs but also surrounding construction elements of the system or device or apparatus containing the battery cells.

In order to ensure the overall safety of vehicles equipped with a rechargeable electrical energy storage system (REESS) containing flammable electrolyte, the vehicle occupants should not be exposed to the hazardous environment resulting from a thermal propagation (which is triggered by a single cell thermal runaway due to an internal short circuit). First goal is to suppress thermal propagation completely. If thermal propagation cannot completely be suppressed, it is requested that no external fire or explosion occurs and no smoke enters the passenger cabin within 5 minutes after the warning of a thermal event.

Battery housing in electric vehicles nowadays are mostly made out of steel or aluminum. Steel has fairly good resistance against jet flame and heat but increases the weight of the battery box substantially. Additionally the steel surface can reach very high temperatures during thermal propagation causing fire of the anti-corrosion coating or neighboring polymer parts or even interior carpet. Therefore additional insulation is required. Aluminum shows good mechanical and weight properties but melts quickly when reached directly by thermal propagation flame. Therefore heavy insulation is required and the risk of burn through remains high.

A housing for a rechargeable energy storage system may, for example, be made out of aluminum or an organic polymer sheet molded compound. Both can be damaged as soon as temperatures of 600°C and above are reached. Even steel casings may be at risk in certain situations such as, for example, a deformation of the casing due to an accident or malfunctioning of an electrical insulation material. There is a risk that heat, and gas gets out of the housing as soon as there is a thermal runaway event within the housing that reaches temperatures that are higher than 600°C. Battery housing based on organic polymers usually only achieve flame resistance by adding flame resistant additives which have a detrimental effect on the mechanical properties.

A further trend is to be noticed, especially in the automotive industry, which is that the rechargeable electrical energy storage systems are getting bigger and bigger and the energy density higher and higher in order to be able to carry more energy, which helps to extend the range a vehicle can drive with a fully charged storage system without recharging the storage system. If such bigger storage systems get defective, the following reactions might also get more intense because of the higher energy stored in those systems. This might lead to higher temperatures.

High energy batteries as those described as 811 (NMC, or nickel-manganese-cobalt ratio) or similar energy density can fail catastrophically if punctured or overheated. When this occurs the ensuing battery fire will not only reach temperatures of 1200°C or above but may also expel shrapnel at moderately high velocities. While battery packs are generally encased in an aluminum shell, aluminum melts at 660°C, so the shell must be protected from the flame and shrapnel of a failed battery to allow occupants of the electrical vehicle to exit in the event of such a failure.

During thermal propagation of a Li-ion battery heat, gas, flames and particles are emitted. The most destructive event during the thermal propagation is the opening of the venting hole, when a jet flame is emitted with velocities of up to Mach 1, temperatures about 1200°C, containing erosive particles and corrosive ingredients.

While some materials exist that can survive a high temperature flame (i.e. greater than 1200°C flame for tens of minutes with no breach), these materials may not be able to withstand the jet flame nor the blast associated with a high energy battery thermal runaway event. Severe risks posed by thermal runaway propagation requires design of the battery module that features jet flame and blast resistant and thermally insulating barriers to mitigate the effects of such a thermal runaway and provide time for vehicle occupants to safely vacate in the event of a fire.

To ensure user safety when utilizing a vehicle, it is anticipated that specifications involving thermal runway events will become more challenging in the near future. Therefore, current standard materials such as aluminum struggle to fulfill the more strict specifications concerning a thermal runway event. An anticipated drawback of aluminum may be that aluminum may most likely not be able to properly contain a flame and/or heat adequately or long enough within a battery housing. Consequently, an aluminum housing may not provide a user sufficient time to leave a vehicle during a dangerous incident such as a thermal runaway event.

Several materials have been investigated to either reduce weight, increase safety and/or reduce cost of multiple materials used in the assembly of a battery. Typical materials applied in a battery are aluminum-based battery housings comprising a battery case (lower lid) and cover case (upper lid), an optional fire resistant sheet, cooling materials, thermal barrier materials, .... Nowadays various companies may develop or possibly market battery housings comprising a combination of a thermoplastic polymer and carbon fibers. Combining a thermoplastic polymer with carbon fibers (such as described in CN 106505170, CN 107331802, US 2013/0252059) may have the advantage of reducing weight of a battery housing compared to steel battery housings while maintaining similar mechanical properties associated with an aluminum battery housing. However, the disadvantage is that such combination struggles to fulfill the more harsh thermal runaway specification such that an additional thermal barrier material may be needed. Therefore, increasing cost, weight and possibly influence recyclability.

Another typical thermal barrier material found in battery applications is a sheet to contain a thermal runway event within one battery cell. Hence, a full thermal runaway event may be avoided. Typical thermal barrier materials found between battery cell have to combine high standards in flame retardancy and thermal management with a specific compression set, such that said thermal barrier may be able to absorb expansion differences between adjacent cells. Hence, minimizing pressure in a manner that damages to adjacent cells may be avoided. Typical materials used to control heat within a cell may be high temperature material like for example mica, silica in combination with compressible materials such as foams or (glass) mineral wool. The compressible materials may adsorb expansion differences associated with the high temperature fluctuations affiliated with the use of batteries. A combination of different materials adversely affects recyclability and the processability of the composite. Additionally, some of these materials may either be known for comprising nanoparticles which potentially could be released in the environment and therefore may possibly cause other health related issues or may possibly induce irritation reactions to the skin.

In view of the above there is still a need for suitable materials and suitable arrangements that help to provide heat and fire shielding and that help to prevent or mitigate damage to adjacent materials and regions from jet flame and blast materials emanating from a malfunctioning battery pack. There is also a need for such suitable material that are easy to use in an assembly process and that provide flexibility with designing a rechargeable electrical energy storage system. Further the material should be lightweight.

As such there is a need for a use of a composite material as a heat and fire shielding material that is capable of withstanding high temperatures and jet flames, contain heat and preferably reduce weight of a component without negatively influencing other mechanical properties.

### SUMMARY

The current invention provides for a use of a composite as a heat shielding and fire shielding material. The heat and fire shielding material being capable of withstanding high temperatures, jet flame as well as impact forces associated with thermal and/or heat applications such as a battery thermal runaway event. The heat and fire shielding material of the present invention helps in case of thermal propagation in batteries to contain the heat, the jet flames and fire emitted from the batteries inside the battery enclosure and away from the vehicle occupants. The time for passenger evacuation in case of a fire is extended. The present invention provides increased safety of electric vehicles. Also in aerospace applications containment of fire is critical (e.g. in passenger planes, Uncrewed Aerial Vehicles (UVA) and drones). The present invention also provides weight savings.

Use of a composite as a heat and fire shielding material according to the invention is provided. The heat and fire shielding material is characterized in that the composite comprises at least one layer of a thermoplastic material. Said at least one layer is based on an at least partial consolidation of a mixture. Said mixture comprises: one or more selected thermoplastic fibers and one or more reinforcement fibers. 90 vol% of the one or more reinforcement fibers have an average length according to a gaussian normal distribution of at least 6 mm, preferably at least 10 mm, more preferably of at least 20 mm, most preferably of at least 25 mm. Combining such selected thermoplastic fibers with such one or more reinforcement fibers has the advantage of increasing the temperature resistance of the heat and fire shielding material. Additionally, an average length according to a gaussian normal distribution of at least 6 mm further increases the thermal properties and/or may positively influence the mechanical properties of the heat and fire shielding material.

### DESCRIPTION OF EMBODIMENTS

For the purpose of clarity and a concise description, features are described herein as part of the same or separate embodiments, however, it will be appreciated that the scope of the invention may include embodiments having combination of all or some of the features described.

Terminology used for describing particular embodiments is not intended to limit the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise.

As used herein, the term "heat and fire shielding material" refers to a material capable of containing heat and/or flame propagation within a closed environment for a pro-longed timing, such as 10 to 20 seconds e.g. in case of a jet flame to several minutes or even hours depending on flame intensity and on the temperature.

As used herein, the term "jet-flame-resistant material", refers to a material showing no breakthrough-hole after exposing a specimen to the following conditions (e.g. flame emitter test): for pre-screening the specimen is tested to withstand a flame force of approx. 15 N at a temperature of 1200°C for up to 15 seconds, at gas velocities same or higher Mach 1. The final target may be aimed at passing UL 2596 Test where 25 cylindrical Li-Ion cells are initiated to a thermal propagation event.

As used herein, the term "consolidated or consolidation form", refers to a composite after a pressing step is provided. Therefore, consolidated may indicate a state after pressing in a hot condition. As used herein, the term "unconsolidated form", refers to a state of starting materials in which no substantial formation of a thermoplastic matrix has occurred yet.

As used herein, the term "thermal runaway event", refers to an incident where one exothermal process triggers other processes, finally resulting in an uncontrollable increase in temperature.

As used herein, the term "semi-finished material", refers to a state of the composite before a thermoforming process.

The inventions disclosed herein, are related to a use of a composite as a heat and fire shielding material, preferably a jet-flame-resistant material. The heat and fire shielding barrier material may be able to contain heat and/or fire within a closed environment, either for a certain period of time, or contains the heat and/or fire within a closed environment such that an uncontrollable temperature increase may be prevented. Hence, it may be possible to use the composite in more high temperature demanding applications such as envisioned in Li-ion batteries.

The composite for use according to the invention comprises at least one layer of a thermoplastic material. The at least one layer of thermoplastic material is based on at least partial consolidation of a mixture of: one or more selected thermoplastic fibers and one or more reinforcement fibers of which 90 vol% have an average length according to a gaussian normal distribution of at least 6 mm.

In a preferred embodiment according to the invention, the reinforcement fibers may comprise inorganic fibers, preferably inorganic oxide fiber. Inorganic reinforcement fibers may be known for having a higher service temperature compared to organic reinforcement fibers. The service temperature of the reinforcement fibers may be above 400°C, preferably above 500°C, more preferably above 600°C. Additionally, organic reinforcement fibers may be used as long as the thermal performance may allow such use. A typical example of an organic reinforcement fiber may comprise aramid fibers.

In a preferred embodiment according to the invention, the reinforcement fibers may be selected from the group consisting of glass fibers, alumina fibers, silica fibers, basalt fibers, ceramic fibers, mullite fibers, aramide fibers, alumina earth silicate (AES) fibers or any combination thereof. These fibers may have the advantage of increasing the mechanical and thermal properties to a level desired for use as a heat and fire shielding material according to the invention. In particular glass fibers are preferred such as E-glass and especially S-glass.

The reinforcement fibers for use according to the invention are generally used as continuous fibers (preferably as woven fabric or as multi-axial layers consisting out of unidirectional fibers oriented in e.g., 0/45/60/90°), as chopped fibers (in the form of a mat (non-woven structure)) or as a mixture of continuous fibers as fabric and multi-axial fiber layers or as a mixture of continuous fibers and chopped fibers. Most preferably continuous fibers are used, preferably woven continuous fibers, non-crimp fabrics or unidirectional (UD) layers preferably multiaxially stacked UD layers. Preferably in the case of a mixture of continuous and chopped fibers this is done layer wise, with surface layers containing continuous fibers and core layers containing chopped fibers. Chopped as well as continuous fibers may have the benefit of demonstrating a better performance under severe thermal evaluations such as a UL2596 evaluation. Short fibers, having an average length according to a gaussian normal distribution of below 6 mm do not provide satisfactory results.

At least 90 vol% of the one or more reinforcement fibers have an average length according to a gaussian normal distribution ≥ 6 mm. Particularly when solely chopped fibers are used it is preferred that they have this minimum length. Continuous fibers anyway fulfill this requirement. Use of a composite according to the invention, comprising at least 90 vol%, preferably 95 vol%, more preferably 99 vol%, even more preferably 100 wt% of reinforcement fibers with a minimum average length according to a gaussian normal distribution of 6 mm may have the advantage to properly increase the mechanical properties such as impact resistance, tensile strength, bending performance, compression strength, stiffness and/or may increase the thermal properties such as fire resistance, heat management.

Further according to the invention, the volume percentage of the reinforcement fibers in the mixture may be in the range of 5 to 80 vol%, preferably 10 to 65 vol%. The volume content may depend on a porosity level of the at least one layer of thermoplastic material. The porosity level referring to an amount of air (in vol %) present in the at least one layer of thermoplastic material. The porosity level may result from partial consolidation of the at least one layer of thermoplastic material. The amount of air present in the layer may be in the range of 1 to 55 vol%.

A variation in the amount of reinforcement fibers may allow to balance the thermal properties with the mechanical properties based on either the type of thermoplastic fibers or the type of application. The optimum volume percentage of reinforcement fibers depends on the type of fiber. In case of random orientated chopped fibers, the content generally is up to 45 vol%, preferably 30 to 40 vol%. In case of unidirectional fibers the content generally is up to 70 vol%, preferably 55 to 65 vol%. In case of woven fibers the content is generally up to 55 vol%, preferably 45 to 50 vol%. Needle punched chopped fibers (e.g. mat structures) may have the advantage that the material can be lofted such that air may be entrapped in the material. Therefore, increasing the thickness of the layer and thereby reducing the volume percentage (vol%) of the reinforcement fibers significantly. A typical volume percentage of reinforcement fibers, after lofting, may be less than 20 vol% or even less than 15 vol%.

Lofting refers here to mechanically expansion, using the spring force of the reinforcement fibers which are oriented during needle punching in Z-direction. During form-pressing and closing of the tool, the forces of Z-oriented reinforcement fibers in the composite material are causing counterpressure on both tool halves. When the applied pressure on the composite material is lower than inside-forces of the composite material (caused by Z-oriented reinforcement fibers), a partial consolidation will result. The consolidation forces depend on the thickness of the composite material, the higher consolidation (resp. thinner thickness with less air content) is desired, the higher the forces applied on the composite materials must be in order to obtain the necessary consolidation ratio (resp. partial consolidation). The consolidation ratio (partial consolidation) can also be controlled by controlling the gap resp. thickness resp. distance between the upper and lower tool half with the stop blocks. In that case, the applied forces on the composite materials can be higher than the required pressure since the stop will ensure to keep the defined thickness resp. gap within the tool half and hinder to compress the composite materials more.

The addition of reinforcement fibers to the mixture may have the further advantage of positively affecting the mechanical properties like for example tensile strength, impact force such that they may be similar to the mechanical properties of aluminum. Further, using such reinforcement fibers may further boost the thermal properties of the heat and fire shielding material.

In a further embodiment according to the invention, the one or more reinforcement fibers in the layer may comprise less than 15 vol%, preferably less than 10 vol%, more preferably less than 5 vol% of carbon fibers. A substantial amount of carbon fibers may possibly have a negative influence on the heat and fire shielding properties of the layer. Hence, not fulfilling high demanding thermal specifications like for example encountered in a UL2596.

Nevertheless, a separate additional (structural) layer in the composite containing a more substantial amount of carbon fibers may have a positive impact on the mechanical properties of the overall composite and may introduce electromagnetic shielding (EMS) into the composite.

According to the invention, the one or more thermoplastic fiber is selected from the group consisting of polyetherimide (PEI), polyamide (PA), polyaryletherketone (PAEK), polyether ketone ketone (PEKK), polycarbonate (PC), polyether ether ketone (PEEK), polyether sulfone (PES), polysulfone (PSU), polyphenylene sulfone (PPSU), polyphenylene sulfide (PPS), polyimide (PI) or any combination thereof. Preferably the thermoplastic fibers may be selected from the group consisting of polyphenylene sulfide (PPS), polyether ether ketone (PEEK), polyether imide (PEI) or any combination thereof. Selecting PPS, PEEK, PEI or any combination thereof has the advantage that the melting point of the thermoplastic fiber increases above 270°C. Hence, positively affecting the temperature resistance of the composite according to the invention. In that respect, it is to be noted that polypropylene (PP) does not provide satisfactory results in terms of temperature resistance.

These thermoplastic fibers have inherit temperature and fire resistant properties such as e.g. they may be self-extinguishing, they may have a high melting temperature, they may be highly fire resistant and/or may be flame resistant. Additionally, inherent temperature resistant may refer to a high service temperature and/or good stability for an extended period of time at said service temperature. A high service temperature may refer to 150°C or higher, preferably above 170°C while an extended period of time may refer to at least 1 hour, preferably at least 2 hours. Therefore, the one or more thermoplastic fibers may comprise polymers that are able to resist a service temperature above 150°C, preferably above 170°C for at least 1 hour, preferably at least 2 hours. A high service temperature of the thermoplastic fibers may increase the temperature resistance of the heat and fire shielding material according to the invention. These thermoplastics are inherently temperature resistant, meaning on their own without flame retardants added. Most preferably the temperature resistant thermoplastic fiber comprises PPS.

The said at least one layer of thermoplastic material may contain only one specific type of the abovementioned thermoplastic fibers but also two or more different types of the abovementioned thermoplastic fibers may be used in said at least one layer. In such latter case and to facilitate processing the thermoplastic fibers that are used in said layer may need to have similar processing temperatures. For example a combination of a higher melting point thermoplastic fiber (such as PEEK, PAI, PI) may be used together with lower melting point thermoplastic fiber (such as PPS, PEI). In such case the higher melting point thermoplastic fiber may comprise up to 30 vol%, preferably up to 10 vol% of the total amount of thermoplastic fiber in said layer. It may be beneficial to use such a combination of selected thermoplastic fibers according to the invention since some of the selected thermoplastic fibers could also provide further improved thermal and mechanical properties such as e.g. impact resistance.

The said at least one layer of thermoplastic material may also comprise a limited amount (e.g. up to 50 vol%, preferably up to 20 vol% of total thermoplastic fiber) of another type of thermoplastic fiber than those listed above provided said other type of thermoplastic fiber has a similar processing temperature than the used selected thermoplastic fiber(s).

In a further embodiment according to the invention, the mixture may further comprise 0-20 vol% of additives, preferably 3-10 vol%. The additives may be selected from the group consisting of bonding agents, flame retardants, toughening agents, antistatic agents, pigments, or any combination thereof. Providing additives in the mixture may have a favorable effect on typical material properties like for example flame retardancy or processing properties but can also help in further improving the heat and fire shielding properties. In that respect a quite substantial amount of flame retardants may be added, in general 5 to 20 vol%.

According to the invention, the at least one layer of thermoplastic material in the composite may be obtained by at least partial consolidation of a prepreg of thermoplastic fibers mechanically positioned by dry impregnation (semi-finished material), in particular needle punching, in between the reinforcement fibers. Needle punching enables fixation of polymer fibers in all 3 directions. Needle punching may have the advantage of lowering energy cost and/or the carbon footprint as the pre-impregnation for the semi-finished material may happen at room temperature. Consolidation is one of the subprocesses occurring during processing of thermoplastic composites. It is necessary to transform several prepreg layers into a solid laminate or part. The consolidation level may be determined by the volume porosity. A percentage below 5 vol% may be an indication of a fully consolidated layer while a vol% above 5 may hint to a partial consolidated layer. Primarily, a volume porosity in the range of 5 vol% to 70 vol% may be considered as partially consolidated.

The composites for use according to the invention may comprise only one layer of such thermoplastic material but preferably the composites comprise a number of such thermoplastic layers, which can differentiate in type of thermoplastic fibers and/or type of reinforcement fibers and/or amount of reinforcement fibers. Preferably the various thermoplastic layers contain the same thermoplastic fibers but different reinforcement fibers, such as PPS/chopped glass fiber and PPS/woven glass fiber.

For example the composite may contain one or more (e.g. 4, 6, 8,....) skin thermoplastic layers particularly to enhance mechanical properties. Further the number of core thermoplastic layers can also be varied (e.g. 8, 6, 4, ...); using less core layers can be used to utilize the lofting (lower density) effect to keep the same wall thickness.

The composite for use as a heat and fire shielding material according to the invention may further comprise a functional layer such as an electromagnetic interference layer or a structural layer. A functional layer may provide the benefit of creating additional properties (not inherently associated with thermoplastic fibers and/or reinforcement fibers) such as blocking noise originating from electrical circuits or allowing higher thermal distribution to avoid concentrate spot heating.

An electromagnetic interference layer may be added to block unwanted noise associated with an electrical path and/or circuit optionally present in an electrical device. Such an electromagnetic interference layer may comprise e.g. PPS, PSU, PEEK, PEKK, PEI, PI and carbon fiber reinforcement, randomly respectively as fabric, metallic mesh, aluminum film, steel film, painted or coated layers with metallic contents.

An additional structural layer being based on e.g. carbon fiber can be included as well.

The composite may also comprise one or more functional layers containing one or more of the selected thermoplastic fibers in the absence of reinforcement fibers to provide e.g. improved chemical resistance or improved wear resistance. For example two different functional layers (e.g., PEI fibers and PEEK fibers) can be provided with one layer providing desired properties with respect to chemical resistance and/or wear resistance on the surface of the composite and the other beneath it to provide improved mechanical properties and/or thermal properties. The surface layer and the layer beneath may be processed by needle punching. Due to the fact that needle punching causes some orientation in Z-direction of the fibers and myriad of fibers of the different layers stand out (in the form of spikes), the various fibers intermingle each other causing some mechanical interlocking by stacking. During processing at high temperature (e.g. for a combination of PEEK and PEI between 360-380C) and subsequent solidification by cooling, both thermoplastic fibers remain physically bonded (due to previous mechanical interlocking caused by needle punching). The advantages of such combination of layers e.g. PEEK-PEI, resp. PPS-PEI, resp. PEEK-PPS is to provide functionalized surfaces e.g. with improved chemical or wear resistance on the facings (skins) of the composite and higher mechanical properties. The thickness of such functionalized layers may be from 0.2 mm up to several mm, e.g. 1 mm to 5 mm. The surface layers may contain reinforcement fibers in the ranges given before or it might be also purely out of thermoplastic fibers.

According to the invention, the total composite may have an area weight in the range of 0.2 kg/m² to 15 kg/m², preferably in the range of 1 kg/m² to 15 kg/m², more preferably in the range of 1.5 kg/m² to 10 kg/m² depending on the application of the heat and fire shielding material. Single thermoplastic layers in the composite may have an area weight of 0.2 to 2 kg/m2. For example the composite may contain face layers of fabric (woven) layers, continuous layers (unidirectional laid in defined orientations e.g. 0/45/60/90° or 0/90 or +45/-45, +60/-60) having an area weight of 200 to 2000 g/m2 and core layers of chopped fibers (without orientation) of area weight 200 to 5000 g/m2.

According to the invention, the composite may have a thickness in the range of 0.3 mm to 15 mm, preferably in the range of 1 mm to 10 mm, more preferably in the range of 1.5 mm to 6 mm.

In a preferred embodiment according to the invention, the composite is used as a jet-flame-resistant heat and fire shielding material. A jet-flame-resistant material may refer to a possible superior class of thermal resistant materials. Hence, indicating an even better heat and fire shielding performance. Whether or not a material is jet-flame-resistant as indicated in the present invention can be tested by standard test UL 2596, Test Method for Thermal and Mechanical Performance of Battery Enclosure Materials which evaluates the performance of battery enclosure materials in a thermal runaway event. Further in order to screen material a simplified "Flame Emitter" test as described above to simulate the jet flame and its kinetic flame energy emitted during thermal propagation in a battery can be used.

A preferred use according to the invention may be in energy storage applications. Preferably, the composite may be used in battery applications especially for use in electric vehicles, e-bikes and aerospace industry.

Preferably the composite may be configured to act as part of a battery housing. The battery housing may comprise a case body (lower part) and a cover (upper part) removably coupled to said case body. More preferably the composite may act as the battery cover. Alternatively the composite may be used as a heat and fire shield between individual battery cells or packs of cells.

In another embodiment of the present invention, a composite is provided that may be suitable to act as a heat and fire shielding material.

The present invention also provides a method of manufacturing such a composite. The method comprising the steps of:
a) Preparing a thermoplastic prepreg by pre-impregnating a thermoplastic material (in particle, fiber or any other form known to date) into a reinforcement material
b) Pre-heating the prepreg for 1 min to several (e.g. 5 to 6) hours, preferably up to 60 minutes, to a temperature in the range of 100 to 450°C, whereby the temperature is dependent upon the type of thermoplastic material (e.g. for PPS, PEI, PEEK the temperature is in the range 280 to 380°C, preferably for PPS in the range 300 to 330°C, for PEI in the range 330 to 360°C and for PEEK in the range 360 to 380°C)
c) Forming the composite by exposing the prepreg to a pre-determined pressure, temperature and time wherein the pressure during molding may be in the range of 1 to 100 bar, wherein the temperature may be in the range 250 to 450°C and wherein the time may be a few minutes (e.g. 1 to 2 minutes) to a few hours (e.g. up to 24 hours) depending on the thickness of the composite and the processing methods.

Typical impregnation processes involve powder impregnation, film stacking, slurry impregnation, paper making technology specifically applied for composite manufacturing (e.g. for Light Weight Reinforced Thermoplastic (LWRT) materials), commingled roving, hybrid yarns or dry impregnation like needle punching. All these processes are well-known in the art of composite manufacturing. Film stacking may refer to piling different layers, commingled yarns may indicate a hybrid structure in which two different materials in the form of fibers are mixed to form continuous-filament yarns while powder impregnation may refer to powder disposition on reinforcement fiber structures followed by thermal Melt-Impregnation. In powder impregnation, powder particles may be deposited into different porous structures like for example woven, fabrics, foams and the like. In slurry impregnation, a slurry of thermoplastic resin powder suspended in a solution of distilled water, a water-soluble polymer, a wetting agent, a biocide, a plasticizer and an antifoamer, which is used to impregnate suitable reinforcing fibers, either continuous or woven, makes a prepreg having tack, drape and easy handleability. The slurry may also include a viscosity reducer. A preferred method to manufacture a prepreg may be dry impregnation, more preferably needle punching. Needle punching may be used to connect the one or more layers with each other. Therefore, needle punching may enable fixing of the thermoplastic fibers in all directions between the reinforcement fibers and/or fabrics. Therefore ensuring good impregnation during thermoforming such as hot pressing.

Form pressing may involve heating material in an oven, transferring heated material from the oven in a tool (tool fixed in a press) and pressing it within minutes. Another form pressing method is variotherm form pressing whereby material is positioned in a cold tool, the tool is closed, pressure is applied, heating is initiated until processing temperature is reached, the material is held under processing temperature and pressure until final impregnation is done, and then cooling is initiated, until the part is solidified and can be removed from the tool; this form pressing method will take hours since heating and cooling of the tool (massive steel) takes a long time. A further pressing method is using inductive tooling, whereby inductive elements are integrated into the tooling, and thus the tool can be heated much quicker. By using autoclave processing times are hours (e.g. 24h). Also Continuous Compression Molding or lamination in a double belt press is applicable, especially for laminate manufacturing of only flat plates.

In a preferred method according the invention, the impregnation may comprise a dry impregnation method, preferably using fleeces (as semi-finished material) produced by needle punching thermoplastic polymer fibers into reinforcement fibers and processing thereof into composites. During processing in said range of temperature the polymer fibers of the needle punched fleeces may start to melt such that the molten polymers may impregnate the reinforcement fibers forming a thermoplastic matrix with reinforcement fibers. To expedite the impregnation additional pressure may be applied such that the thermoplastic melt will flow in between the one or more reinforcement fibers. A typical pressure, during thermoforming, is in the range of 1 to 100 bar. Depending on the pressure, a pressing time may variate from several minutes to several hours, preferably the pressing time is in the range of 1 minute to 24 hours. For example, in an autoclave applying a pressure of 1 bar, the pressing time may be in the range of 1 to 24 h. Increasing the pressure to 100 bar would reduce the pressing time in the range of 1 to 60 minutes. The process temperature during pre-heating may depend on the polymer processing temperature and preferably is in the range of 250°C up to 450°C for the preferred thermoplastics such as PPS, PEEK, PEEK, PEI, PSU, PES. Furthermore, a thicker material may result in an increased processing time as more time may be needed in heating the prepreg and forming the composite.

A preferred method of manufacturing the composites of the present invention is through the so-called KyronTex^{®} method, as developed by Mitsubishi Chemicals Advanced Materials. Reference in this respect is made to WO 2006/111037, US 2015/0044438, US 2015/0030804, US 2021/0197519, WO 2019/068939, WO 2020/074677, WO 2020/074678, WO 2021/052988, all incorporated herein by reference.

WO 2006/111037 describes a planar composite material which contains a fiber non-woven layer made of thermoplastics fibers and a woven or oriented layer made of parallel reinforcing fiber bundles. The individual layers can be either needled together or thermally bonded to each other. This composite material can be processed by means of heat pressing to form components having controlled reinforcement.

Production via KyronTex process provides by itself additional flame resistance due to the superior integration of the heat resistant thermoplastic fibers and the reinforcement fibers by the needling process.

KyronTex^{®} Organofleeces are produced on textile processing machines and afterwards molded by form-pressing process into Organosheets (= consolidated Organofleeces) or directly into parts. Needling enables fixing of the polymer fibers into reinforcement fibers and mechanically placement of polymer fibers in between the reinforcement fibers and thus enabling good impregnation so that also large tows can be used. Organofleeces can be consolidated into laminates in order to achieve full impregnation. Due to consolidation methods such as compression moulding, double belt press, continuous compression moulding.

KyronTex produces a combination of a polymer staple fiber like Polyphenylensulfid (PPS) which needle preimpregnates a fabric or a polymer staple fiber which is homogenously mixed with chopped reinforcement fiber. This two material types can be combined in a laminate such as a technical sandwich comprising a core layer which is arranged between and integrally bonded to two face layers (such as described in US 2012/0197519). The high performing continuous fibers being present in the skin layers of the laminate protect against the initially high outburst of the battery.

Examples of suitable composites for use according to the examples are:
- laminate of a plystack of multiple layers of thermoplastic KyronTex prepreg with semicrystalline polymer (PPS) with chopped glass fibers
- laminate of a plystack of multiple (e.g. 10) layers of thermoplastic prepreg (KyronTex) with semicrystalline polymer Polyphenylensulfid (PPS) with continuous glass fibers
- laminate of semicrystalline polymer Polyphenylensulfid (PPS) with continuous glass fibers as one or more skin layers and core of a plystack of multiple (e.g. 9) layers of thermoplastic prepreg (KyronTex) with semicrystalline polymer Polyphenylensulfid (PPS) with chopped glass fibers (in total 11 layers of KyronTex)
- laminate of a plystack of multiple layers (e.g. 15) of thermoplastic KyronTex prepreg with semicrystalline polymer Polyphenylensulfid (PPS) with continuous basalt fibers
- above listed laminates with a wall thickness of less than 2,4 mm.

The invention is further described by specific examples and accompanying figures.

### Examples

Various composites were made according to a variothermal lamination process as presented in the accompanying Figures.

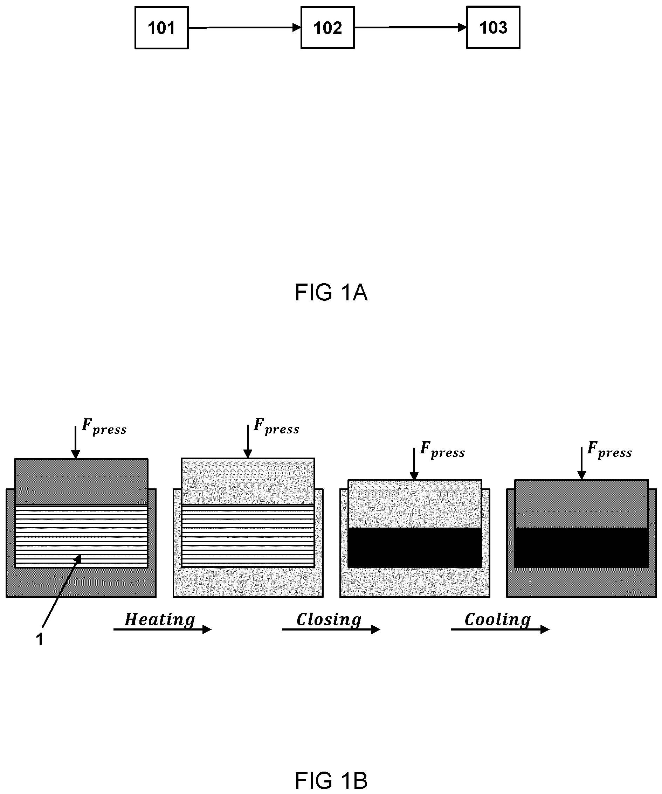

Figure 1A describes a method to produce a composite according to the invention suitable as heat and fire resistant material. More specifically, the method comprises a heating step (101), a pressurizing step (102) and a cooling and demolding step (103). The method is in detailed presented in Figure 1B. Figure 1B shows that multiple layers (1) may be stacked in a mold such that properties can be modified according to a specific application. After the stacking, the mold together with the stacked layers will be heated to a processing temperature of e.g. 250°C. The processing temperature may melt and/or soften the thermoplastic fibers. Hence, making the thermoplastic fibers movable and/or fluid. Once the mold and stacked layers have reached the desired temperature, the mold will be closed and a specific pressure (e.g. 50 bar) will be applied on the stacked layers. The pressure combined with the desired processing temperature results in an at least partial consolidation of the thermoplastic fibers with the reinforcement fibers resulting in a composite according to the invention.

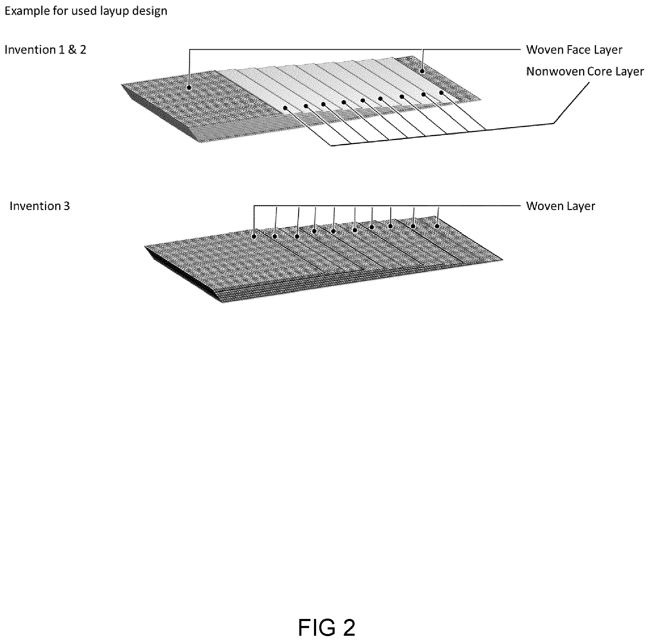

Various composites as listed in Table 1 below were made according to this method. The layout of the various composites is shown in Figure 2. The volume content mentioned in Table 1 are expressed based on the total composite.

Example 1 comprises a thermoplastic KyronTex layer of continuous woven glass fibers and PPS staple fibers. This material has an aerial weight of 480 gsm with a 47% ply wise (i.e. per layer) fiber volume content. Within the layup of invention 1 and 2 (Table 1) this layer is combined with another KyronTex layer based on PPS and chopped glass fiber that has an aerial weight of 500 gsm and a ply wise fibre volume content of 35%. 11 plies were symmetrically stacked in a sandwich layup with a total aerial weight of 5460 g/m². The skin on each side of the laminate consists of the above layer containing continuous glass fibers while the core consists out of 9 layers of the KyronTex containing chopped glass fiber. Such a laminate allows for high performance values while using a cost-efficient core material and the possibility for further functionalization by lofting (controlled porosity).

To produce laminates a variothermal process was used. Invention 1 and 2 were pressed at a maximum processing temperature of 330°C and a hold time of 240 seconds. The specific pressure acting onto the material was 20 bar. Inv. 1 was fully consolidated to a thickness of 3.06 mm and a density of 1,79 g/cm³. Inv. 2 was partially consolidated by using the lofting effect of the core and achieved a thickness of 5 mm with a density of 1,09 g/cm³.

Composites according to the other examples were made in a similar manner.

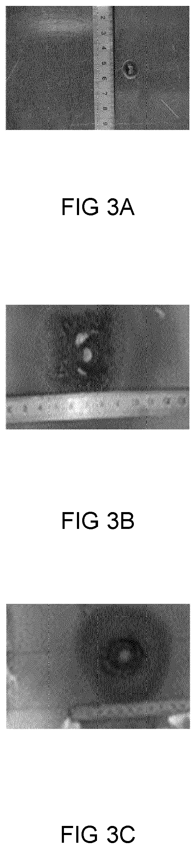

The composites were tested in a Flame Emitter. The results are shown in Figures 3A-3C.

Figures 3A - 3C show results after a flame emitter test for a comparative composite 1 (Fig. 3A) and multiple composites (Fig. 3B - 3C) according to the invention. Comparing comp. 1 in figure 3A with composites (inv. 1 and inv. 3) in respectively figures 3B - 3C indicates that comp. example 1 is not able to resist the stringent flame emitter test resulting in through hole. Examples inv. 1, inv. 2 and inv. 3 were all resistant to said flame emitter test showing the superior thermal performance of a composite according to the invention.

**Table 1**

| | **Comparative** | **Inv. 1** | **Inv. 2** | **Inv. 3** |
|---|---|---|---|---|
| **Flame emitter test passed?** | **NO** | **YES** | **YES** | **YES** |
| **Material** | **KyronTEX** | **KyronTEX** | **KyronTEX** | **KyronTEX** |
| **Description** | PPS Carbon nonwoven | PPS Glass Sandwich | PPS Glass Sandwich lofted | PPS Glass woven |
| **Sample Thickness [mm]** | 3 | 3 | 5 | 2,40 |
| **Reinforcement Fiber Type** | Carbon Chopped | Glass Sandwich | Glass Sandwich | Glass woven |
| **Fiber Orientation (Random, Woven, UD)** | Random | Skin Layer: Layer | Skin Layer: Layer Woven | Woven Satin |
| | | Woven P1/1 T2/2 | P1/1 T2/2 | |
| | | Core Layer: Random GF | Core Layer: Random GF | |
| **Single Layer Areal Weight [g/m²]** | 1500 | Nonwoven (Core) 500 | Nonwoven (Core) 500 | 460 |
| | | Woven (Skin) 480 | Woven (Skin) 480 | |
| **Number of Layers / Plybook** | 3 | Core Layers: 9 | Core Layers: 9 | 10 |
| | | Skin Layers: 2 | Skin Layers: 2 | |
| **Resin** | PPS | PPS | PPS | PPS |
| **Total Areal Weight [g/m²]** | 4500 | 5460 | 5460 | 4600 |
| **Volume Content reinforcement fibers random (Core layers)** | 35.75% | 28.96% | 17.72% | 0% |
| **Volume Content continuous reinforcement fibers (skin)** | 0% | 7.72% | 4.71% | 50.73% |
| **Volume Content thermoplastic polymer** | 64.25% | 63.22% | 38.66% | 49.27% |
| | | 8.72% surface layers | 5.33% surface layers | |
| | | 54.5% core layers | 33.33% core layers | |
| **Volume Content Air** | 0% | 0% | 38.91% | 0% |

## Claims

1. Use of a composite as a heat and fire shielding material, **characterized in that** the composite comprises at least one layer of a thermoplastic material, wherein said at least one layer is based on an at least partial consolidation of a mixture of:
a. one or more thermoplastic fibers selected from the group consisting of polyphenylene sulfide (PPS), polyether ether ketone (PEEK), polyether ketone-ketone (PEKK), polyether imide (PEI), polyether sulfone (PES), polysulfone (PSU), polyphenylene sulfone (PPSU), polyimide (PI), polycarbonate (PC), polyamide (PA), polyaryletherketone (PAEK) or any combination thereof; and
b. one or more reinforcement fibers;
wherein at least 90 vol% of the one or more reinforcement fibers have an average length according to a gaussian normal distribution of at least 6 mm, preferably of at least 10 mm, more preferably of at least 20 mm.

2. Use according to claim 1, wherein the reinforcement fibers are inorganic fibers, preferably inorganic oxide fibers.

3. Use according to claim 1 or claim 2, wherein the volume percentage of the one or more reinforcement fibers in the mixture is in the range of 5 to 80 vol%, preferably 10 to 65 vol%,

4. Use according to any one of the preceding claims, wherein the one or more reinforcement fibers comprises continuous fibers and/or chopped reinforcement fibers, preferably the continuous fibers are woven or multi axial unidirectional (UD) fabrics (non.crimp fabrics).

5. Use according to any one of the preceding claims, wherein the one or more reinforcement fiber is selected from the group consisting of glass fibers, alumina fibers, mullite fibers, alumina earth silicate fibers, silica fibers, basalt fibers, aramide fibers and/or ceramic fibers.

6. Use according to any one of the preceding claims wherein less than 15 vol%, preferably less than 10 vol% of the one or more reinforcement fibers comprises carbon fibers.

7. Use according to any of the preceding claims, wherein the composite is a jet-flame-resistant material.

8. Use according to any one of the preceding claims wherein the mixture further comprises 0-20 vol% of additives, wherein the additives are selected from the group consisting of bonding agent, toughening agents, flame retardants, antistatic agents and pigments.

9. Use according to any of the preceding claims, wherein the composite further comprises one or more functional layers such as electromagnetic interference layers or structural layers.

10. Use according to any one of the preceding claims wherein the at least one layer of thermoplastic material in the composite is obtained by at least partial consolidation of a prepreg of thermoplastic fibers mechanically positioned by dry impregnation, in particular needle punching, in between the reinforcement fibers.

11. Use according to any one of the preceding claims, wherein the composite has an area weight in the range of 0.2 kg/m² to 15 kg/m², preferably in the range of 1 kg/m² to 15 kg/m², more preferably in the range of 1.5 kg/m² to 10 kg/m².

12. Use according to any one of the preceding claims wherein the composite comprises several of such layers of thermoplastic material, either derived from the same or different thermoplastic fibers and/or the same or different reinforcement fibers in either the same or different amounts.

13. Use according to claim 12 wherein the composite contains (a) face layer(s) comprising continuous reinforcement fibers and (a) core layer(s) containing chopped fibers.

14. Use according to any one of the preceding claims wherein the composite contains at least two face layers, the top layer containing a thermoplastic fiber and 0 to 80 vol% reinforcement fibers, and a further layer beneath said top layer containing another type of thermoplastic fiber having a processing temperature in the same range and 5 to 80 vol% reinforcement fibers whereby the thermoplastic fibers from both layers are physically bonded together.

15. Use according to any of the preceding claims in electrical energy storage applications such as batteries.

16. Use according to claim 15, wherein the composite is configured to act as part of a battery housing, the battery housing comprising a case body and a cover removably coupled to said case body.

17. Use according to claim 16 wherein the composite acts as the battery cover.

18. A composite as defined in any one of the preceding claims, suitable to act as a heat and fire shielding material.

19. A method of manufacturing a composite as defined in claim 18, the method comprising the steps of:
a) preparing a thermoplastic prepreg by pre-impregnating a thermoplastic material into a reinforcement material
b) pre-heating the prepreg for 1 minute to several hours to a temperature in the range of 100 to 450°C
c) forming the composite by exposing the prepreg to a pre-determined pressure, temperature and/or time.

20. The method according to claim 19, wherein the impregnation comprises dry impregnation, preferably needlepunching.
